# EUROPÄISCHE PATENTSCHRIFT

(11) **EP 3 106 840 B1**
(45) Veröffentlichungstag und Bekanntmachung des Hinweises auf die Patenterteilung: **28.02.2018**
(21) Anmeldenummer: 15172377.2
(22) Anmeldetag: 16.06.2015
(51) Int. Cl.: G01D 11/24

(54) **ELEKTRISCHER SENSOR MIT ABSCHIRMHÜLLE**
ELECTRIC SENSOR WITH SHIELDING ENCLOSURE
CAPTEUR ELECTRIQUE AVEC GAINE DE BLINDAGE

(43) Veröffentlichungstag der Anmeldung: 21.12.2016
(73) Patentinhaber: BAUMER ELECTRIC AG, 8500 Frauenfeld (CH)
(72) Erfinder: Wehrle, Wolfgang, 78467 Konstanz (DE); Simon, Hanspeter, 78224 Singen (CH); Hohloch, Erich, 8355 Aadorf (CH)
(74) Vertreter: Strauss, Steffen

(56) Entgegenhaltungen:
- EP-A1- 2 015 033
- DE-A1-102014 216 353
- GB-A- 2 181 607
- US-B2- 7 649 349

## Beschreibung

Die vorliegende Erfindung betrifft einen elektrischen Sensor zur Erfassung einer physikalischen Größe.

Elektrische Sensoren werden zur Detektion physikalischer Größen, beispielsweise Geschwindigkeit, Abstand oder Temperatur, verwendet. Dabei erfolgen die Messungen häufig kontaktlos, das heißt, ohne dass es zu einem physischen Kontakt zwischen dem Sensor und dem Messobjekt kommt. Kontaktlose Messungen verringern die Abnutzung der Sensoren und vereinfachen Messungen von sich bewegenden oder schwer zugänglichen Objekten. Für kontaktlose Messungen werden meist elektromagnetische Felder oder Strahlung genutzt, die entweder vom Sensor selbst oder vom zu vermessenden Objekt erzeugt werden. Ein Beispiel für kontaktlose elektrische Sensoren sind Geschwindigkeitssensoren, die auf dem Hall-Effekt basieren. In diesen Sensoren wird die Bewegung eines Objektes durch ein vom Sensor erzeugtes Magnetfeld detektiert.

Elektrische Sensoren sind anfällig gegenüber elektromagnetischen oder kapazitiven Störungen. Diese Störungen können beispielsweise von anderen elektrischen Geräten oder elektrischen Leitungen in der Nähe des elektrischen Sensors herrühren. Die Störungen können sich negativ auf die Sensorelemente und auf die Sensorelektronik auswirken und somit die Qualität der Messungen verringern, insbesondere in kontaktlosen Sensoren welche elektromagnetische Felder für die Messung physikalischer Größen verwenden. Um elektrische Sensoren vor solchen Störungen zu schützen sind elektrische Abschirmungen bekannt, die auf dem Prinzip des faradayschen Käfigs basieren. Dabei wird das abzuschirmende Objekt von einer Hülle aus einem elektrisch leitenden Material umhüllt. Allerdings wird die Anbringung einer derartigen Abschirmung oft durch die kompakte Bauweise der Sensoren und der Notwendigkeit einer Erdung der Abschirmung erschwert. Zudem sind die Sensorelemente und die Sensorelektronik oft in ein Gehäuse eingebaut, welches sich selbst nicht als Abschirmung eignet und die Anbringung einer zusätzlichen Abschirmhülle erschwert.

Aus der US 7 649 349 B2 ist ein Anschlussteil für ein Schaltgerät mit einem hülsenförmigen Grundkörper bekannt, der zum Einschieben und/oder Aufschieben in bzw. auf eine Gehäusehülse des Schaltgeräts ausgebildet ist, mit einer im Innenbereich des Grundkörpers ausgebildeten Führung zum Aufnehmen und Fixieren eines Trägers mit einer Leiterplatte und mit einer Zentriereinrichtung zum geeigneten Positionieren des in den Grundkörper einzuführenden Trägers bezüglich der Führung. Die Baugruppe für das Schaltgerät umfasst eine Sensoreinheit mit einem Sensor zum Nachweis eines Messsignals und eine auf einem Träger angeordnete elektronische Schaltung. Der Träger ist an mindestens einem Messende mit der Sensoreinheit formstabil verbunden. Die Schaltung ist mit der Sensoreinheit elektrisch verbunden. Eine Schirmung umschliesst den Träger koaxial und ist mit der Sensoreinheit und/oder mit dem Träger formstabil verbunden.

Die GB 2 181 607A zeigt eine elektronische Vorrichtung mit einem abgeschirmten Kabel. Das eine Ende des abgeschirmten Kabels ist in ein Gehäuse eingepasst, in dem ein elektronisches Element untergebracht ist, wobei ein elektrisch leitfähiger Draht mit dem elektronischen Element elektrisch verbunden ist. Ein durch teilweises Entfernen eines Bewehrungsschlauchs freigelegter Bereich des Abschirmmaterials ist mit einem an dem Gehäuse vorgesehenen Abschirmbereich elektrisch verbunden.

Die DE 10 2014 216 353 A1 zeigt einen kabelgebundenen Sensor mit Sensorgehäuse bei dem das Sensorgehäuse einen Niederhalter zum Niederhalten einer Platine bei einem Vergiessvorgang aufweist, wobei der Niederhalter an einer Gehäusewand des Sensorgehäuses angeordnet ist.

Die EP 2 015 033 A1 beschreibt einen Sensor mit einem von einer Abschirmung umgebenen Sensorelement. Der Sensor weist einen durch mindestens drei Leiterplatten gebildeten Leiterplattenstapel mit einem Innenraum auf, wobei im Innenraum an zumindest einer Innenseite einer der Leiterplatten störempfindliche Schaltungsteile liegen, die durch den Leiterplattenstapel gegenüber Störstrahlung von außen geschützt sind.

Es ist die der Erfindung zugrundeliegende Aufgabe, einen elektrischen Sensor zur Erfassung einer physikalischen Größe anzugeben, der von einer Abschirmhülle zum Schutz vor elektromagnetischen oder kapazitiven Störungen umhüllt wird.

Befestigung des Sensors bestehen. Das Gehäuse kann eine Gehäusebeschriftung zur Identifizierung des Sensors aufweisen.

Bei dem elektrischen Sensor zur Erfassung einer physikalischen Größe ist die Abschirmhülle mittels einer elektrisch leitenden Befestigungshülse an der Leitungsabschirmung befestigt, wobei die elektrisch leitende Befestigungshülse die Leitungsabschirmung zumindest teilweise umschließt und elektrisch leitend mit der Leitungsabschirmung verbunden ist. Dadurch wird der Vorteil erreicht, dass die Abschirmhülle an der Leitungsabschirmung befestigt und über die Leitungsabschirmung geerdet werden kann.

Die Befestigungshülse kann aus einem Metall oder einer metallischen Verbindung, beispielsweise Messing, bestehen. Der Innendurchmesser der Befestigungshülse kann so gewählt werden, dass die Befestigungshülse reibschlüssig auf der Leitungsabschirmung aufliegt. Der äußere Umfang der Befestigungshülse kann rund oder mehreckig sein.

Bei dem elektrischen Sensor zur Erfassung einer physikalischen Größe ist die Leitungsabschirmung durch die Befestigungshülse durchgeführt und über einen Teil der Befestigungshülse zurückgestülpt, wobei der zurückgestülpte Abschnitt der Leitungsabschirmung auf dem Teil der Befestigungshülse fixiert ist. Dadurch wird der Vorteil erreicht, dass die Befestigungshülse auf der Leitungsabschirmung befestigt und eine Verschiebung der Befestigungshülse entlang der Leitungsabschirmung vermieden werden kann.

Gemäß einer Ausführungsform weist die Befestigungshülse auf der der Leiterplatte zugewandten Seite eine Verlängerung mit geringem Durchmesser auf, über welche die Leitungsabschirmung zurückgestülpt werden kann.

In einer vorteilhaften Ausführungsform des elektrischen Sensors zur Erfassung einer physikalischen Größe ist der zurückgestülpte Abschnitt der Leitungsabschirmung mittels eines Crimprings auf dem Teil der Befestigungshülse fixiert. Dadurch wird der Vorteil erreicht, dass die Anbringung der Befestigungshülse auf der Leitungsabschirmung stabil und zugfest erfolgen kann.

In einer vorteilhaften Ausführungsform des elektrischen Sensors zur Erfassung einer physikalischen Größe ist die Abschirmhülle elektrisch leitend mittels einer stoffschlüssigen.

Verbindung, insbesondere einer elektrisch leitenden Klebeverbindung, an der Befestigungshülse befestigt, wobei über die Befestigungshülse eine elektrische Verbindung zwischen der Abschirmhülle und der Leitungsabschirmung besteht. Dadurch wird der Vorteil erreicht, dass eine effiziente und elektrisch leitende Befestigung der Abschirmhülle auf der Befestigungshülse geschaffen wird.

Bei der elektrisch leitenden Klebeverbindung kann es sich um eine doppelseitige Klebefolie handeln, deren eine Seite an der Befestigungshülse und deren andere Seite an der Abschirmhülle angeklebt ist.

In einer vorteilhaften Ausführungsform des elektrischen Sensors zur Erfassung einer physikalischen Größe weist die Befestigungshülse eine Mehrzahl von Steckanschlüssen auf, die aus axialen Bohrungen im Mantel der Befestigungshülse bestehen, und weist die Leiterplatte zwei Verbindungsstecker aus einem elektrisch isolierenden Material zur mechanischen Fixierung an den Steckanschlüssen der Befestigungshülse auf. Dadurch wird der Vorteil erreicht, dass eine effiziente und elektrisch isolierte Befestigung der Leiterplatte an der Befestigungshülse ermöglicht wird.

Die Verbindungsstecker können aus einem elektrisch isolierenden Kunststoff bestehen. Gemäß einer Ausführungsform können die Verbindungsstecker aus einer Spitze mit einem Durchmesser bestehen, welcher komplementär zum Durchmesser der Steckanschlüsse ist, und einer Basis mit erhöhtem Durchmesser, welcher das Eindringen der Verbindungsstecker in die Steckanschlüsse begrenzt. Der Abstand der Verbindungstecker und die Anordnung der Steckanschlüsse können so gewählt werden, dass die Basis der Verbindungsstecker reibschlüssig auf dem Crimpring aufliegt, welcher auf der zurückgestülpten Leitungsabschirmung angebracht ist.

In einer vorteilhaften Ausführungsform des elektrischen Sensors zur Erfassung einer physikalischen Größe umfasst das Sensorelement einen Magneten, der an der den Verbindungssteckern gegenüberliegenden Seite der Leiterplatte angeordnet ist. Dadurch wird der Vorteil erreicht, dass der Sensor Messungen durchführen kann für die ein magnetisches Feld benötigt wird.

Es kann sich bei dem Magneten um einen Permanentmagneten handeln. Gemäß einer Ausführungsform enthält die Leiterplatte an der den Verbindungssteckern gegenüberliegenden Seite eine Befestigungsmöglichkeit für einen Magneten, wobei der Magnet mit einem Pol in Richtung der von den Verbindungssteckern und der Befestigungshülse abgewandten Seite ausgerichtet ist. Durch diese Ausrichtung kann erreicht werden, dass die magnetischen Feldlinien des Magneten aus der Stirnseite des elektrischen Sensors herauszeigen und somit der elektrische Sensor auf ein zu vermessendes Objekt ausgerichtet werden kann.

In einer vorteilhaften Ausführungsform des elektrischen Sensors zur Erfassung einer physikalischen Größe besteht die Leiterplatte aus einem Substrat mit einer Flexprint-Beschichtung. Dadurch wird der Vorteil erreicht, dass die eine effiziente Leitungsanordnung auf der Leitungsplatte realisiert werden kann.

Die Flexprint-Beschichtung kann an einer oder beiden Seiten des Substrates angebracht sein. Das Substrat kann aus einem elektrisch isolierenden Kunststoff bestehen.

In einer vorteilhaften Ausführungsform des elektrischen Sensors zur Erfassung einer physikalischen Größe weist die Abschirmhülle einen mehreckigen Querschnitt auf. Dadurch wird der Vorteil erreicht, dass die Abschirmhalle aus einer gefalteten Schicht oder einem Schichtsystem gefertigt werden kann.

In einer vorteilhaften Ausführungsform des elektrischen Sensors zur Erfassung einer physikalischen Größe besteht die Abschirmhülle zumindest teilweise aus einem elektrisch isolierenden Basismaterial, welches zumindest teilweise mit einer elektrisch leitenden Beschichtung beschichtet ist. Dadurch wird der Vorteil erreicht, dass eine effiziente Abschirmung der Leiterplatte mit dem Sensorelement erreicht wird.

Bei dem elektrisch isolierenden Basismaterial kann es sich um eine flexible Leiterplatte handeln, beispielsweise eine Folie aus einem Polymermaterial. Bei der elektrisch leitenden Beschichtung kann es sich um eine Kupferbeschichtung handeln.

In einer vorteilhaften Ausführungsform des elektrischen Sensors zur Erfassung einer physikalischen Größe ist auf der elektrisch leitenden Beschichtung eine zusätzliche elektrisch isolierende Schicht aufgebracht, welche die elektrisch leitende Beschichtung zumindest teilweise bedeckt. Dadurch wird der Vorteil erreicht, dass ein elektrischer Kontakt zwischen der Abschirmhülle und der Leiterplatte mit dem Sensorelement, sowie zwischen der Abschirmhülle und dem Gehäuse vermieden werden kann.

Die zusätzliche Beschichtung kann eine Polymerschicht sein. Sie kann die elektrisch leitende Schicht größtenteils abdecken, wobei ein Teil der elektrisch leitenden Schicht nicht beschichtet wird, um einen elektrischen Kontakt zwischen der Abschirmhülle und der Befestigungshülse zu ermöglichen. Folglich besteht die Abschirmhülle aus einer elektrisch leitenden Schicht, welche auf der einen Seite durch das Basismaterial und auf der anderen Seite durch die zusätzliche Beschichtung elektrisch isoliert wird. Durch diesen Aufbau kann die Abschirmhülle in physischen Kontakt mit der Leiterplatte auf ihrer Innenseite und dem Gehäuse auf ihrer Außenseite stehen, ohne dass es zu einem elektrischen Kontakt zwischen Leiterplatte und Abschirmhülle, oder Gehäuse und Abschirmhülle kommt. Ferner kann auch das Sensorelement auf der Stirnseite der Leiterplatte in physischen Kontakt zur Abschirmhülle platziert werden, wodurch der Abstand des Sensorelements zu einem zu vermessenden Objekt auf der Stirnseite des elektrischen Sensors verringert und somit die Sensorleistung erhöht werden kann.

In einer vorteilhaften Ausführungsform des elektrischen Sensors zur Erfassung einer physikalischen Größe weist die Abschirmhülle eine Mehrzahl von Durchbrüchen auf, die im Umfang der Abschirmhülle angeordnet sind. Dadurch wird der Vorteil erreicht, dass ein vollständiges Ausgießen des Gehäuses mit einer elektrisch isolierenden viskosen Substanz ermöglicht wird.

In einer vorteilhaften Ausführungsform des elektrischen Sensors zur Erfassung einer physikalischen Größe ist das Gehäuse zumindest teilweise mit einer elektrisch isolierenden viskosen Substanz, insbesondere einem Harz, ausgefüllt. Dadurch wird der Vorteil erreicht, dass die Anordnung der Leitungsanordnung, der Leiterplatte und der Abschirmhülle im Gehäuse stabilisiert und eine zusätzliche elektrische Isolierung der Abschirmhülle gegenüber der Leiterplatte und dem Gehäuse erreicht werden kann.

Die elektrisch isolierende viskose Substanz kann über diejenigen axialen Bohrungen in der Befestigungshülse, welche nicht durch einen Verbindungsstecker der Leiterplatte ausgefüllt sind, in das Gehäuse eingefüllt werden. Die elektrisch isolierende viskose Substanz kann durch die Durchbrüche in der Abschirmhülle in den Raum zwischen Abschirmhülle und Gehäuse eindringen und somit eine zusätzliche elektrische Isolierung zwischen der Abschirmhülle und dem Gehäuse bilden. Die elektrisch isolierende viskose Substanz kann auch die Befestigung der Leitungsanordnung an der Leiterplatte stabilisieren.

In einer vorteilhaften Ausführungsform des elektrischen Sensors zur Erfassung einer physikalischen Größe ist das Sensorelement ein Hallsensorelement. Dadurch wird der Vorteil erreicht, dass der elektrische Sensor ein Hallsensor ist, welcher durch die Abschirmhülle effizient vor elektromagnetischen und kapazitiven Störungen abgeschirmt ist.

Gemäß einem zweiten Aspekt der Erfindung wird ein elektrischer Sensors zur Erfassung einer physikalischen Größe mit einem Verfahren hergestellt, wobei das Verfahren die folgenden Schritte umfasst: das Bereitstellen eines Gehäuses; das Anordnen einer Leiterplatte mit einem Sensorelement in dem Gehäuse; das elektrische Verbinden einer elektrischen Leitungsanordnung mit der Leiterplatte; das zumindest teilweise Umschließen der elektrischen Leitungsanordnung mit einer elektrisch leitfähigen Leitungsabschirmung; das zumindest teilweise Umhüllen der Leiterplatte und des Sensorelements mit einer elektrisch leitenden Abschirmhülle, wobei die Abschirmhülle mit der Leitungsabschirmung elektrisch verbunden und gegenüber dem Gehäuse und der Leiterplatte elektrisch isoliert wird. Dadurch wird der Vorteil erreicht, dass der elektrische Sensor zur Erfassung einer physikalischen Größe mit der Abschirmhülle zum Schutz vor elektromagnetischen und kapazitiven Störungen effizient hergestellt werden kann.

Ausführungsbeispiele der Erfindung sind in den Zeichnungen dargestellt und werden im Folgenden näher beschrieben.

Es zeigen:
- Fig. 1: eine Schnittansicht eines elektrischen Sensors zur Erfassung einer physikalischen Größe gemäß einer Ausführungsform; und
- Fig. 2: Schematische Darstellungen der einzelnen Komponenten eines elektrischen Sensors zur Erfassung einer physikalischen Größe gemäß einer Ausführungsform.

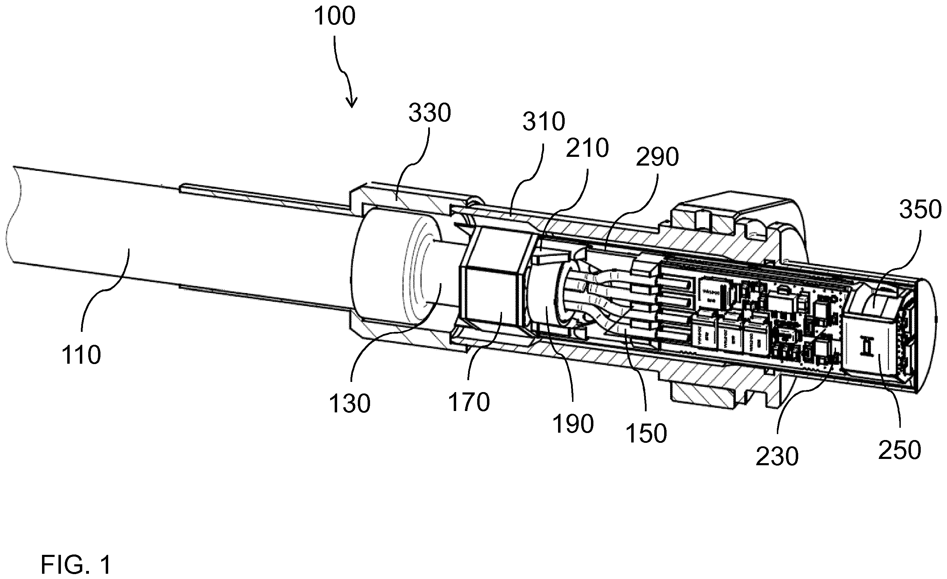

Fig. 1 zeigt eine Schnittansicht eines elektrischen Sensors 100 zur Erfassung einer physikalischen Größe gemäß einer Ausführungsform. Der elektrische Sensor umfasst ein Gehäuse 310, eine Abschirmhülle 290 und eine Leiterplatte 230 mit einem Sensorelement 250, welche mittels einer Befestigungshülse 170 mit einer Leitungsabschirmung 130 befestigt sind.

Der elektrischen Sensor 100 zur Erfassung einer physikalischen Größe kann ausgebildet sein, umfassend: ein Gehäuse 310; eine in dem Gehäuse angeordnete Leiterplatte 230 mit einem Sensorelement 250; eine elektrische Leitungsanordnung 150, welche an die Leiterplatte 230 elektrisch angeschlossen ist; eine elektrisch leitfähige Leitungsabschirmung 130, welche die elektrische Leitungsanordnung zumindest teilweise umschließt; und eine elektrisch leitende Abschirmhülle 290, welche die Leiterplatte 230 und das Sensorelement 250 zumindest teilweise umhüllt, wobei die Abschirmhülle 290 mit der Leitungsabschirmung 130 elektrisch verbunden und gegenüber dem Gehäuse 310 und der Leiterplatte 230 elektrisch isoliert ist.

Das Sensorelement 250 auf der Leiterplatte 230 kann ein elektrisches Sensorelement 250 für kontaktlose Messungen sein, beispielsweise ein Geschwindigkeitssensorelement, ein Abstandssensorelement oder ein Temperatursensorelement. Das Sensorelement 250 kann für die Messungen elektromagnetische Felder oder Strahlung erzeugen und/oder detektieren. Zusätzlich zum Sensorelement 250 kann die Leiterplatte 230 die Elektronik zum Ansteuern und Auslesen des Sensorelements 250, sowie zu dessen Energieversorgung enthalten.

Die an der Leiterplatte 230 angeschlossene Leitungsanordnung 150 kann ein einzelnes Kabel oder ein Kabelverbund sein. Die Befestigung und elektrische Kontaktierung des Leiters an der Leiterplatte kann über Lötverbindungen erfolgen. Zu diesem Zweck kann die Leiterplatte 230 ein oder mehrere Lötpads enthalten an denen die Leitungsanordnung 150 angelötet ist. Die Leitungsabschirmung 130 kann ein Kabelschirm sein, welcher aus einem Schirmgeflecht besteht. Die Leitungsabschirmung 130 kann zudem teilweise von einem Mantel 110 aus einem nichtleitenden Material ummantelt sein. Das Gehäuse des elektrischen Sensors kann auf diesem Mantel mit einer Rollenhülse 330 befestigt sein.

Das Gehäuse 310 kann aus einem elektrisch leitenden oder elektrisch isolierenden Material bestehen. Insbesondere kann es aus einem Flanschrohr mit einem Flansch zur Befestigung des Sensors bestehen. Das Gehäuse 310 kann eine Gehäusebeschriftung zur Identifizierung des Sensors aufweisen.

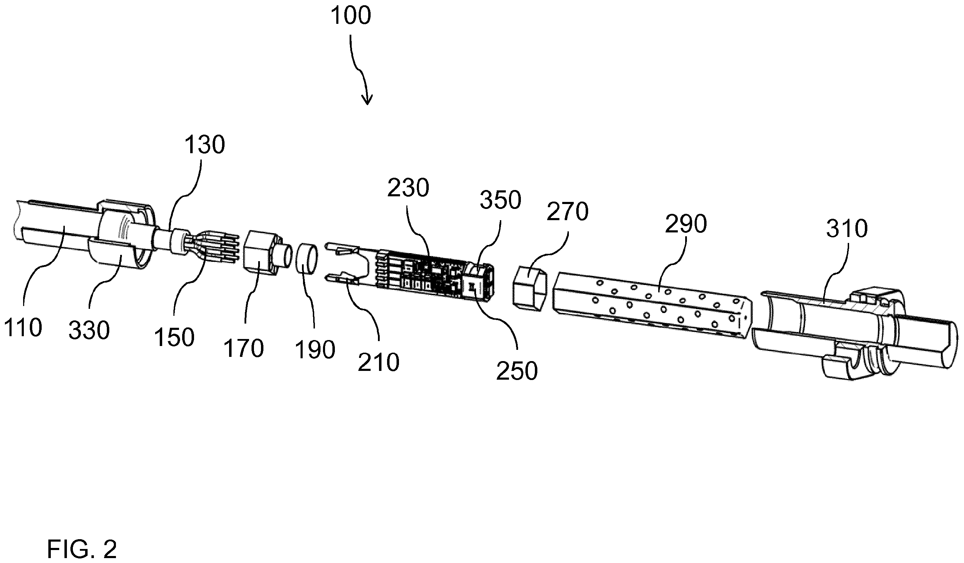

Fig. 2 zeigt eine schematische Darstellung der einzelnen Komponenten eines elektrischen Sensors 100 zur Erfassung einer physikalischen Größe. Bei den Komponenten handelt es sich unter anderen um eine Leitungsanordnung 150 mit einer Leitungsabschirmung 130 und einem Mantel 110, eine Befestigungshülse 170, eine Leiterplatte 230 mit Verbindungssteckern 210 und einem Sensorelement 250, eine Abschirmhülle 290 und ein Gehäuse 310.

Zur Befestigung der Abschirmhülle 290 wird eine Befestigungshülse 170 verwendet, durch welche die Leitungsabschirmung 130 geführt und dabei elektrisch kontaktiert wird. Zu diesem Zweck kann der elektrisch isolierende Mantel 110, welcher die Leitungsabschirmung 130 zusätzlich ummanteln, gekürzt werden. Durch die Verwendung eines elektrisch leitenden Materials für die Befestigungshülse 170, beispielsweise Messing, entsteht ein elektrischer Kontakt zwischen Leitungsabschirmung 130 und Befestigungshülse 170. Ferner kann die Befestigungshülse 170 auf der der Leiterplatte 230 zugewandten Seiten eine Verlängerung mit verringertem Durchmesser aufweisen. Über diese Verlängerung kann der auf dieser Seite der Befestigungshülse 170 überstehende Teil der Leitungsabschirmung 130 zurückgestülpt und mittels einer Crimpverbindung befestigt werden. Hierzu kann ein Crimpring 190 über den zurückgestülpten Teil der Leitungsabschirmung 130 geschoben und mittels Crimpung fixiert werden. Diese Crimpverbindung ist zugfest und ermöglicht eine stabile Verbindung der Befestigungshülse 170 mit der Leitungsabschirmung 130.

Zur Befestigung der Abschirmhülle 290 kann auf der Befestigungshülse 170 eine elektrisch leitende Klebeverbindung 270, beispielsweise ein doppelseitige Klebeband, an der Befestigungshülse 170 angebracht werden. Die Leitungsabschirmung 130 kann über die Befestigungshülse 170 geschoben und auf dem elektrisch leitenden doppelseitigen Klebeband fixiert werden. Dadurch entsteht über die Befestigungshülse 170 eine elektrisch leitende Verbindung zwischen der Abschirmhülle 290 und der Leitungsabschirmung 130. Somit kann die Abschirmhülle 290 über die Leitungsabschirmung 130 geerdet und beispielsweise eine elektrische Aufladung der Abschirmhülle 290 vermieden werden. Um die Abschirmhülle 290 auf der Befestigungshülse 170 zusätzlich zu fixieren, kann ein elastischer elektrisch isolierender Schlauch, beispielsweise ein Silikonschlauch, unter Spannung über der Abschirmhülle 290 gezogen werden. Dieser Schlauch drückt die Abschirmhülle 290 auf die Befestigungshülse 170 und führt zu einer stabileren Verbindung zwischen Abschirmhülle 230 und Befestigungshülse 170.

Die Leiterplatte 230 besteht aus einem elektrisch isolierenden Substrat, beispielsweise ein Kunststoff, welches auf einer oder auf beiden Seiten mit einer Flexprint-Beschichtung beschichtet ist. Mit dieser Anordnung kann eine hohe Flexibilität der Leitungsanordnung auf der Leiterplatte 230 und eine kostengünstige Herstellung erreicht werden. Ferner kann die Leiterplatte 230 zwei Verbindungsstecker 210 aufweisen, welche der Befestigung an komplementären Steckanschlüssen in der Befestigungshülse 170 dienen. Die Verbindungsstecker 210 können aus dem gleichen elektrisch isolierenden Material wie das Substrat der Leiterplatte 230 bestehen. Somit entsteht kein elektrischer Kontakt zwischen Leiterplatte 230 und Befestigungshülse 170, und die Leiterplatte ist ebenso von der Abschirmhülle 290 und der Leitungsabschirmung 130 elektrisch isoliert. Ferner können die Verbindungsstecker 210 einen zweiteiligen Aufbau ausweisen, bestehend aus einer Spitze, welche in die Steckanschlüsse der Befestigungshülse 170 eindringt, und einer Basis mit einem im Vergleich zur Spitze erhöhten Durchmesser, welcher das Eindringen der Verbindungsstecker 210 in die Steckanschlüsse begrenzt. Um ein Herausrutschen der Verbindungssteckern 210 aus den Steckanschlüssen in der Befestigungshülse 170 zu vermeiden, kann die Basis der beiden Verbindungsstecker 210 reibschlüssig auf dem Crimpring 190 aufliegen, welcher zwischen den beiden Verbindungssteckern 210 eingeklemmt wird.

Der Anschluss der Leitungsanordnung 150 an der Leiterplatte 230 kann über Lötverbindungen erfolgen. Dabei werden die Leitungen der Leitungsanordnung 150 an Lötpads auf der Leiterplatte 230 angelötet. Um dies zu vereinfachen, kann sich vor jedem Lötpad auf der Leiterplatte 150 eine Führung für eine Leitung befinden. Diese Führung kann aus einer länglichen Vertiefung in oder auf der Leiterplatte 230 besteht. Die Führung kann das Anlöten der Leitungsanordnung 150 an der Leiterplatte 230 während des Herstellungsprozesses vereinfachen und die Stabilität der Verbindung zwischen Leitungsanordnung 150 und Leiterplatte 230 erhöhen.

Die Leiterplatte enthält einen Magneten 350, welcher an der Stirnseite der Leiterplatte 230 angeordnet ist, wobei ein Magnetpol in Richtung der von den Verbindungssteckern 210 abgewandten Seite der Leiterplatte 230 zeigt. Aufgrund dieser Ausrichtung treten die magnetischen Feldlinien des Magneten 350 aus der Stirnseite des elektrischen Sensors 100 aus, so dass der elektrische Sensor 100 mit seiner Stirnseite auf ein zu vermessendes Objekt ausgerichtet werden kann. Der Magneten 350 kann gemäß einer Ausführungsform Teil eines Hallsensorelements sein und der elektrische Sensor 100 ein Hallsensor. Beispielsweise kann ein solcher Hallsensor in das Getriebe eines Antriebsystems eingebaut werden und die Drehzahl eines Zahnrades messen.

Die Abschirmhülle 290 besteht aus einem elektrisch isolierenden Basismaterial, beispielsweise einer Basisfolie einer flexiblen Leiterplatte, mit einer elektrisch leitfähigen Beschichtung. Bei der Beschichtung kann es sich um eine Kupferbeschichtung handeln. Das Basismaterial kann zu einer Abschirmhülle mit mehreckigem Querschnitt gefaltet werden, was zu einer hohen Flexibilität bei der Dimensionierung und einem geringen Gewicht der Abschirmhülle 290 führt. Die elektrisch leitfähige Schicht auf der Abschirmhülle 290 kann mit einer zusätzlichen elektrisch isolierenden Schicht, beispielsweise einer Polymerschicht, beschichtet sein. Die dabei entstehende Abschirmhülle 290 besteht aus einer elektrisch leitenden Schicht, welche auf beiden Seiten von einer elektrisch nicht leitenden Schicht bedeckt ist: auf der einen Seite vom elektrisch isolierenden Basismaterial, und auf der anderen Seite von der elektrisch isolierenden Schicht. Eine Abschirmhülle 290 mit einer auf solche Art und Weise doppelt isolierten elektrisch leitenden Schicht hat den Vorteil, dass sie in physischen Kontakt mit der Leiterplatte 230 und dem Gehäuse 310 stehen kann, ohne dass dabei ein elektrischer leitender Kontakt zwischen Leiterplatte 230 und Abschirmhülle 290, oder zwischen Abschirmhülle 290 und Gehäuse 310 entsteht. Dies kann die Herstellung des elektrischen Sensors 100 vereinfachen, da nicht mehr sichergestellt werden muss, dass Abstände zwischen der Leiterplatte 230, der Abschirmhülle 290 und dem Gehäuse 310 genau eingehalten werden, um nicht gewollte elektrische Kontakte zu vermeiden. Der Aufbau der Abschirmhülle 290 aus einer doppelt isolierten elektrisch leitenden Schicht erlaubt außerdem das Sensorelements 250 an der Stirnseite der Leiterplatte 230 in physischen Kontakt mit der Abschirmhülle 290 zu platzieren. Hierdurch kann der Abstand des Sensorelements 250 von einem zu vermessenden Objekt auf der Stirnseite des elektrischen Sensors 100 verringert und somit die Sensorleistung erhöht werden. Außerdem kann die Intensität eines im Sensorelement 250 erzeugten elektromagnetischen Feldes außerhalb des elektrischen Sensors 100 erhöht werden.

Die Abschirmhülle 290 kann eine Mehrzahl von Durchbrüchen 280 aufweisen, die im Umfang der Abschirmhülle 290 angeordnet sind. Diese Durchbrüche 280 ermöglichen ein komplettes Ausfüllen des Gehäuses 310 mit einem elektrisch isolierenden Harz. Dieses Harz kann eine zusätzliche elektrische Isolierung der Abschirmhülle 290 gegenüber der Leiterplatte 230 und dem Gehäuse 310 bilden. Das Harz dient außerdem der Stabilisierung und Fixierung aller in dem Gehäuse angebrachten Komponenten. Ferner dient es der Fixierung und elektrischen Isolierung der an die Leiterplatte 230 angelöteten Leitungsanordnung 150. Das Harz kann in das Gehäuse 310 über die nicht belegten Steckanschlüsse in der Befestigungshülse 170 eingefüllt werden. Diese Steckanschlüsse bestehen aus axialen Bohrungen im Mantel der Befestigungshülse 170, wobei die Bohrungen den Mantel in axialer Richtung komplett durchdringen.

Gemäß einer Ausführungsform ist das Gehäuse 310 auf einem elektrisch isolierenden Mantel 110 auf der Leitungsanordnung mittels einer Rollenhülse 330 angeordnet. Hierdurch entsteht eine stabile Verbindung, welche die Rotation des Gehäuses 310 um die Längsachse der Leitungsanordnung 130 erlaubt und somit den Aufbau von Scherkräften zwischen Gehäuse 310 und Leitungsanordnung 130 verhindert. Dies vereinfacht die Anbringung und Ausrichtung des Gehäuses 310 am Einsatzort des elektronischen Sensors 100 und erlaubt den Einsatz von sich bewegenden Objekten.

## Patentansprüche

1. Elektrischer Sensor (100) zur Erfassung einer physikalischen Größe, umfassend:
- ein Gehäuse (310);
- eine in dem Gehäuse (310) angeordnete Leiterplatte (230) mit einem Sensorelement (250);
- eine elektrische Leitungsanordnung (150), welche an die Leiterplatte (230) elektrisch angeschlossen ist;
- eine elektrisch leitfähige Leitungsabschirmung (130), welche die elektrische Leitungsanordnung (150) zumindest teilweise umschließt; und
- eine elektrisch leitende Abschirmhülle (290), welche die Leiterplatte (230) und das Sensorelement (250) zumindest teilweise umhüllt, wobei die Abschirmhülle (290) mit der Leitungsabschirmung (130) elektrisch verbunden und gegenüber dem Gehäuse (310) und der Leiterplatte (230) elektrisch isoliert ist,
**dadurch gekennzeichnet, dass**
die Abschirmhülle (290) mittels einer elektrisch leitenden Befestigungshülse (170) an der Leitungsabschirmung (130) befestigt ist, wobei die elektrisch leitende Befestigungshülse (170) die Leitungsabschirmung (130) zumindest teilweise umschließt und elektrisch leitend mit der Leitungsabschirmung (130) verbunden ist und die Leitungsabschirmung (130) durch die Befestigungshülse (170) durchgeführt und über einen Teil der Befestigungshülse (170) zurückgestülpt ist, wobei der zurückgestülpte Abschnitt der Leitungsabschirmung (130) auf dem Teil der Befestigungshülse (170) fixiert ist.

2. Elektrischer Sensor (100) nach Anspruch 1, wobei der zurückgestülpte Abschnitt der Leitungsabschirmung (130) mittels eines Crimprings (190) auf dem Teil der Befestigungshülse (170) fixiert ist.

3. Elektrischer Sensor (100) nach Anspruch 1, wobei die Abschirmhülle (290) elektrisch leitend mittels einer stoffschlüssigen Verbindung, insbesondere einer elektrisch leitenden Klebeverbindung (270), an der Befestigungshülse (170) befestigt ist, wobei über die Befestigungshülse (170) eine elektrische Verbindung zwischen der Abschirmhülle (290) und der Leitungsabschirmung (130) besteht.

4. Elektrischer Sensor (100) nach Anspruch 1, wobei die Befestigungshülse (170) mindestens einen, vorzugsweise zwei Steckanschlüsse (160) aufweist, die aus axialen Bohrungen (180) im Mantel der Befestigungshülse (170) bestehen, wobei die Leiterplatte (230) mindestens einen, vorzugsweise zwei Verbindungsstecker (210) zur mechanischen Fixierung an den mindestens einen Steckanschluss (160) der Befestigungshülse (170) aufweist, wobei der mindestens eine Verbindungsstecker (210) aus einem elektrisch isolierten Material ausgeführt ist.

5. Elektrischer Sensor (100) nach Anspruch 4, wobei das Sensorelement (250) einen Magneten (350) umfasst, der an der den Verbindungssteckern (210) gegenüberliegenden Seite der Leiterplatte (230) angeordnet ist.

6. Elektrischer Sensor (100) nach einem der vorstehenden Ansprüche, wobei die Leiterplatte (290) aus einem Substrat mit einer Flexprint-Beschichtung besteht.

7. Elektrischer Sensor (100) nach einem der vorstehenden Ansprüche, wobei die Abschirmhülle (290) einen mehreckigen Querschnitt aufweist.

8. Elektrischer Sensor (100) nach einem der vorstehenden Ansprüche, wobei die Abschirmhülle (290) zumindest teilweise aus einem elektrisch isolierenden Basismaterial besteht, welches zumindest teilweise mit einer elektrisch leitenden Beschichtung beschichtet ist.

9. Elektrischer Sensor (100) nach Anspruch 8, wobei auf der elektrisch leitenden Beschichtung eine zusätzliche elektrisch isolierende Schicht aufgebracht ist, welche die elektrisch leitende Beschichtung zumindest teilweise bedeckt.

10. Elektrischer Sensor (100) nach einem der vorstehenden Ansprüche, wobei die Abschirmhülle (290) eine Mehrzahl von Durchbrüchen aufweist, die im Umfang der Abschirmhülle (290) angeordnet sind.

11. Elektrischer Sensor (100) nach einem der vorstehenden Ansprüche, wobei das Gehäuse (310) zumindest teilweise mit einer elektrisch isolierenden viskosen Substanz, insbesondere einem Harz, ausgefüllt ist.

12. Elektrischer Sensor (100) nach einem der vorstehenden Ansprüche, wobei das Sensorelement (250) ein Hallsensorelement ist.

13. Verfahren zum Herstellen eines elektrischen Sensors (100) zur Erfassung einer physikalischen Größe, wobei das Verfahren die folgenden Schritte umfasst:
- das Bereitstellen eines Gehäuses (310);
- das Anordnen einer Leiterplatte (230) mit einem Sensorelement (250) in dem Gehäuse (310);
- das elektrische Verbinden einer elektrischen Leitungsanordnung (150) mit der Leiterplatte (230);
- das zumindest teilweise Umschließen der elektrischen Leitungsanordnung (150) mit einer elektrisch leitfähigen Leitungsabschirmung (130);
- das zumindest teilweise Umhüllen der Leiterplatte (230) und des Sensorelements (250) mit einer elektrisch leitenden Abschirmhülle (290), wobei die Abschirmhülle (290) mit der Leitungsabschirmung (130) elektrisch verbunden und gegenüber dem Gehäuse (310) und der Leiterplatte (230) elektrisch isoliert wird,
- wobei die Abschirmhülle (290) mittels einer elektrisch leitenden Befestigungshülse (170) an der Leitungsabschirmung (130) befestigt wird, wobei die elektrisch leitende Befestigungshülse (170) die Leitungsabschirmung (130) zumindest teilweise umschließt und elektrisch leitend mit der Leitungsabschirmung (130) verbunden ist und
- wobei die Leitungsabschirmung (130) durch die Befestigungshülse (170) durchgeführt wird und über einen Teil der Befestigungshülse (170) zurückgestülpt wird, wobei der zurückgestülpte Abschnitt der Leitungsabschirmung (130) auf dem Teil der Befestigungshülse (170) fixiert wird.

## Claims

1. Electrical sensor (100) for the detection of a physical quantity, comprising:
- a housing (310);
- a printed circuit board (230) located in the housing (310) with a sensor element (250);
- an electrical cable arrangement (150) which is electrically connected to the printed circuit board (230);
- an electrically conductive cable shield (130) which at least partially encloses the electrical cable arrangement (150); and
- an electrically conductive shielding sleeve (290), which at least partially encloses the printed circuit board (230) and the sensor element (250), whereby the shielding sleeve (290) is electrically connected to the cable shield (130) and is electrically insulated vis-à-vis the housing (310) and the printed circuit board (230),
**characterized in that**
the shielding sleeve (290) is attached to the cable shield (130) by means of an electrically conductive mounting sleeve (170), whereby the electrically conductive mounting sleeve (170) at least partially encloses the cable shield (130) and is electrically conductively connected to the cable shield (130) and the cable shield (130) is routed through the mounting sleeve (170) and is turned back over a part of the mounting sleeve (170), whereby the turned-back section of the cable shield (130) is fixed to the part of the mounting sleeve (170).

2. Electrical sensor (100) in accordance with Claim 1, whereby the turned-back section of the cable shield (130) is fixed to the part of the mounting sleeve (170) by means of a crimp ring (190).

3. Electrical sensor (100) in accordance with Claim 1, whereby the shielding sleeve (290) is electrically conductively attached to the mounting sleeve (170) by means of a substance-to-substance connection, in particular an electrically conductive adhesive bond (270), whereby an electrical connection exists between the shielding sleeve (290) and the cable shield (130) through the mounting sleeve (170).

4. Electrical sensor (100) in accordance with Claim 1, whereby the mounting sleeve (170) has at least one and preferably two plug connections (160) consisting of axial holes (180) in the sheath of the mounting sleeve (170), whereby the printed circuit board (230) has at least one and preferably two connectors (210) for mechanical fixation to the at least one plug connection (160) of the mounting sleeve (170), whereby the at least one connector (210) is made of an electrically insulated material.

5. Electrical sensor (100) in accordance with Claim 4, whereby the sensor element (250) comprises a magnet (350) which is located on the side of the printed circuit board (230) opposite the connectors (210).

6. Electrical sensor (100) in accordance with any one of the preceding Claims, whereby the printed circuit board (290) consists of a substrate with a flex print coating.

7. Electrical sensor (100) in accordance with any one of the preceding Claims, whereby the shielding sleeve (290) has a polygonal cross-section.

8. Electrical sensor (100) in accordance with any one of the preceding Claims, whereby the shielding sleeve (290) consists at least partially of an electrically insulating base material which is at least partially coated with an electrically conductive coating.

9. Electrical sensor (100) in accordance with Claim 8, whereby an additional electrically insulating coating is applied to the electrically conductive coating, said electrically insulating coating at least partially covering the electrically conductive coating.

10. Electrical sensor (100) in accordance with any one of the preceding Claims, whereby the shielding sleeve (290) has a number of openings which are located in the circumference of the shielding sleeve (290).

11. Electrical sensor (100) in accordance with any one of the preceding Claims, whereby the housing (310) is filled at least partially with an electrically insulating viscous substance, in particular a resin.

12. Electrical sensor (100) in accordance with any one of the preceding Claims, whereby the sensor element (250) is a Hall sensor element.

13. Process for producing an electrical sensor (100) for the detection of a physical quantity, whereby the process comprises the following steps:
- the provision of a housing (310);
- the mounting of a printed circuit board (230) with a sensor element (250) in the housing (310);
- the electrical connection of an electrical cable arrangement (150) with the printed circuit board (230);
- the at least partial enclosure of the electrical cable arrangement (150) with an electrically conductive cable shield (130);
- the at least partial enclosure of the printed circuit board (230) and of the sensor element (250) with an electrically conductive shielding sleeve (290), whereby the shielding sleeve (290) is electrically connected with the cable shield (130) and is electrically insulated vis-à-vis the housing (310) and the printed circuit board (230),
- whereby the shielding sleeve (290) is attached to the cable shield (130) by means of an electrically conductive mounting sleeve (170), whereby the electrically conductive mounting sleeve (170) at least partially encloses the cable shield (130) and is electrically conductively connected to the cable shield (130) and
- whereby the cable shield (130) is routed through the mounting sleeve (170) and is turned back over a part of the mounting sleeve (170), whereby the turned-back section of the cable shield (130) is fixed to the part of the mounting sleeve (170).

## Revendications

1. Capteur électrique (100) permettant de détecter une grandeur physique, comprenant :
- un boîtier (310) ;
- une carte de circuit imprimé (230) disposée dans le boîtier (310) avec un élément de détection (250) ;
- un agencement de câble électrique (150), qui est raccordé électriquement à la carte de circuit imprimé (230) ;
- un blindage de câble électroconducteur (130), qui entoure au moins partiellement l'agencement de câble électrique (150) ; et
- une enveloppe de blindage électroconductrice (290), qui enveloppe au moins partiellement la carte de circuit imprimé (230) et l'élément de détection (250), l'enveloppe de blindage (290) étant raccordée électriquement au blindage de câble (130) et est isolé électriquement par rapport au boîtier (310) et à la carte de circuit imprimé (230),
**caractérisé en ce que**
l'enveloppe de blindage (290) est fixée au blindage de câble (130) au moyen d'une douille de fixation électroconductrice (170), la douille de fixation électroconductrice (170) entourant au moins partiellement le blindage de câble (130) et étant raccordée de manière électroconductrice au blindage de câble (130) et le blindage de câble (130) étant réalisé par la douille de fixation (170) et étant retourné par emboutissage sur une partie de la douille de fixation (170), la section retournée par emboutissage du blindage de câble (130) étant fixée sur la partie de la douille de fixation (170).

2. Capteur électrique (100) selon la revendication 1, la section retournée par emboutissage du blindage de câble (130) étant fixée à la partie de la douille de fixation (170) au moyen d'un sertissage (190).

3. Capteur électrique (100) selon la revendication 1, l'enveloppe de blindage (290) étant fixée de manière électroconductrice à la douille de fixation (170) au moyen d'un raccord par conjugaison de matière, en particulier d'un assemblage collé électroconducteur (270), la douille de fixation (170) formant un raccord électrique entre l'enveloppe de blindage (290) et le blindage de câble (130).

4. Capteur électrique (100) selon la revendication 1, la douille de fixation (170) présentant au moins une fiche (160), de préférence deux, qui sont constituées d'alésages axiaux (180) dans le gainage de la douille de fixation (170), la carte de circuit imprimé (230) présentant au moins un raccord (210), de préférence deux, pour la fixation mécanique à la au moins une fiche (160) de la douille de fixation (170), le au moins un raccord (210) étant réalisé dans un matériau isolé électriquement.

5. Capteur électrique (100) selon la revendication 4, l'élément de détection (250) comprenant un aimant (350), qui est disposé sur le côté de la carte de circuit imprimé (230) opposé aux raccords (210).

6. Capteur électrique (100) selon l'une des revendications précédentes, la carte de circuit imprimé (290) étant composée d'un substrat doté d'un revêtement Flexprint.

7. Capteur électrique (100) selon l'une des revendications précédentes, l'enveloppe de blindage (290) présentant une coupe transversale polygonale.

8. Capteur électrique (100) selon l'une des revendications précédentes, l'enveloppe de blindage (290) étant composée au moins partiellement d'un matériau de base d'isolement électrique, qui est revêtu au moins partiellement d'un revêtement électroconducteur.

9. Capteur électrique (100) selon la revendication 8, une couche d'isolement électrique supplémentaire étant appliquée sur le revêtement électroconducteur, ladite couche recouvrant au moins partiellement le revêtement électroconducteur.

10. Capteur électrique (100) selon l'une des revendications précédentes, l'enveloppe de blindage (290) présentant une multitude de ruptures, disposées sur la circonférence de l'enveloppe de blindage (290).

11. Capteur électrique (100) selon l'une des revendications précédentes, le boîtier (310) étant au moins partiellement rempli d'une substance visqueuse d'isolement électrique, en particulier d'une résine.

12. Capteur électrique (100) selon l'une des revendications précédentes, l'élément de détection (250) étant un élément de détection à effet Hall.

13. Procédé de fabrication d'un capteur électrique (100) permettant de détecter une grandeur physique, le procédé comprenant les étapes suivantes consistant à :
- fournir un boîtier (310) ;
- disposer une carte de circuit imprimé (230) dotée d'un élément de détection (250) dans le boîtier (310) ;
- raccorder électriquement un agencement de câble électrique (150) à la carte de circuit imprimé (230) ;
- entourer au moins partiellement l'agencement de câble électrique (150) d'un blindage de câble électroconducteur (130) ;
- envelopper au moins partiellement la carte de circuit imprimé (230) et l'élément de détection (250) d'une enveloppe de blindage électroconductrice (290), l'enveloppe de blindage (290) étant raccordée électriquement au blindage de câble (130) et isolée électriquement par rapport au boîtier (310) et à la carte de circuit imprimé (230),
- l'enveloppe de blindage (290) étant fixée au blindage de câble (130) au moyen d'une douille de fixation électroconductrice (170), la douille de fixation électroconductrice (170) entourant au moins partiellement le blindage de câble (130) et étant raccordée de manière électroconductrice au blindage de câble (130) et
- le blindage de câble (130) étant réalisé par la douille de fixation (170) et retourné par emboutissage sur une partie de la douille de fixation (170), la section retournée par emboutissage du blindage de câble (130) étant fixée sur la partie de la douille de fixation (170).
